# EUROPÄISCHE PATENTSCHRIFT

(11) **EP 4 193 829 B1**
(45) Veröffentlichungstag und Bekanntmachung des Hinweises auf die Patenterteilung: **09.10.2024**
(21) Anmeldenummer: 22210859.9
(22) Anmeldetag: 01.12.2022
(51) Int. Cl.: A01G 17/14, E04H 17/10

(54) **PFAHL AUS METALLBLECH FÜR DEN WEIN- ODER OBSTBAU**
SHEET METAL PILE FOR VINE OR FRUIT CULTIVATION
PIQUET EN TÔLE MÉTALLIQUE POUR LA VITICULTURE OU LA CULTURE FRUITIÈRE

(30) Priorität: 07.12.2021 DE 102021132181
(43) Veröffentlichungstag der Anmeldung: 14.06.2023
(73) Patentinhaber: voestalpine Präzisionsprofil GmbH, 50354 Hürth (DE)
(72) Erfinder: GILSON, Manfred, 52428 Jülich (DE)
(74) Vertreter: Gesthuysen Patentanwälte

(56) Entgegenhaltungen:
- EP-A1- 2 111 745
- EP-A1- 3 132 677
- EP-B1- 1 788 860
- DE-A1- 102004 007 470
- DE-A1- 102004 011 778
- DE-A1- 3 533 963
- DE-A1- 3 608 549
- DE-C1- 19 629 023
- IT-A1- UD 940 181

## Beschreibung

Die Erfindung betrifft einen Pfahl aus Metallblech für den Wein- oder Obstbau, mit einem im wesentlichen U-förmigen Querschnitt, mit einem U-Rücken und zwei U-Schenkeln, wobei an den U-Schenkeln jeweils mindestens ein außenliegender Haken zur Aufnahme eines Drahtes ausgebildet ist, wobei die Haken durch Stanzen und Prägen aus den U-Schenkeln gebildet sind und jeweils einen mit dem U-Schenkel verbundenen Hakenfuß und eine in etwa parallel zum U-Schenkel verlaufende Zunge aufweisen.

Derartige Pfähle werden seit Jahrzehnten insbesondere als Weinbergpfähle eingesetzt. Die Pfähle werden dabei im Wesentlichen senkrecht in den Erdboden eingedrückt und in der Regel zeilenweise zueinander angeordnet. Dabei haben bereits seit vielen Jahren aus profilierten bzw. profilgewalzten Metallblechen, insbesondere Stahlblechen, hergestellte Pfähle die ursprünglich verwendeten Holzpfähle verdrängt, da Holzpfähle bei der zunehmenden Verwendung von landwirtschaftlichen Maschinen im Obst- und Weinbau nur bedingt geeignet sind. Bei Holzpfählen besteht das Problem darin, dass sich die in die Holzpfähle eingeschlagenen Haken und Krampen bei der maschinellen Ernte lösen, was zum einen zu einer Beschädigung der Drahtrahmen führt, zum anderen können die Haken und Krampen zusammen mit den Trauben in die Pressen und Maischepumpen gelangen, wo es dann zu Beschädigungen kommen kann.

Vielfach werden dabei einfach profilierte Pfähle mit aus dem Blech ausgestanzten und abgebogenen Haken zum Einhängen und Befestigen der Drähte verwendet. Bei derartigen Pfählen mit sogenannten "außenliegenden" Haken ist sowohl das Einhängen als auch das maschinelle Aushängen der Drähte sehr einfach möglich. Es besteht jedoch die Gefahr, dass die Haken durch den Einsatz der Maschinen, insbesondere durch die Schlagstöcke der Vollerntemaschinen beschädigt, insbesondere zusammengedrückt werden, so dass die Haken vor dem Umhängen der Drähte von Hand wieder aufgebogen werden müssen, was mit einem entsprechenden Mehraufwand verbunden ist.

Aus der DE 35 33 963 C2 ist ein U-förmiger Pfahl bekannt, der an den Enden der beiden U-Schenkel je eine einwärts gerichtete Rinne aufweist, die nach außen über die U-Schenkel hervorsteht. An den U-Schenkeln sind außenliegenden Haken ausgebildet, wobei neben dem Haken je ein Vorsprung vorgesehen ist, der dazu dient, den im Haken gehaltenen Draht vor ungewolltem Aushängen zu sichern. Der Vorsprung wird dabei dadurch gebildet, dass die einwärts gerichtete Rinne auf Höhe des Hakens flach gedrückt ist. Zum Umhängen des Drahtes ist es dabei jedoch erforderlich, den Draht bezogen auf seine Längsrichtung stark abzuknicken, was bei unter Spannung stehenden Drähten nur mit großem Kraftaufwand möglich ist. Ein gewolltes Umhängen der Drähte ist jedoch insbesondere während der Vegetationszeit notwendig, damit das Wachstum der Triebe nicht behindert wird.

Die EP 1 788 860 B1 offenbart einen Weinbergpfahl mit mehreren außenliegenden Haken, die durch Stanzen und Biegen eines der Hakenform entsprechenden Stanzmusters aus einem im Wesentlichen flächigen Bereich der Schenkel des Weinbergpfahls durch Tiefziehen hergestellt werden, wozu vor dem Biegen des Hakens ein flächiger Stanzabschnitt als Stanzausfall aus dem flächigen Bereich des Schenkels entfernt wird. Der Haken weist mehrere Teilabschnitte auf, wobei der erste Teilabschnitte aus dem flächigen Bereich des Schenkels ausläuft und einen V-förmigen Querschnitt aufweist, der durch das Tiefziehen in hohem Maße plastisch deformiert ist. Der daran anschließende zweite Teilabschnitt bildet einen Aufnahmebereich für den einzulegenden Draht und weist ebenfalls einen im wesentlichen V-förmigen Querschnitt auf. Da zur Ausbildung der Haken jeweils ein flächiger Stanzabschnitt als Stanzausfall ausgestanzt werden muss, entsteht bei der Herstellung ungenutzter "Abfall", so dass diese Art der Weinbergpfähle nicht sehr ressourcenschonend und damit auch nicht nachhaltig ist.

Auch die DE 196 29 023 C1 offenbart einen Weinbergpfahl mit außenliegenden Haken, die jeweils eine aus dem Schenkel heraus ansteigende Hakenfuß und eine parallel zum Schenkel verlaufende Zunge aufweisen. Bei einem ersten Ausführungsbeispiel weist die Zunge zum freien Ende hin ein verbreitetes Hakenteil auf, dem ein verjüngter Abschnitt des Stanzloches gegenüberliegt. Dadurch kann die Zunge nicht wieder durch das Stanzloch gedrückt werden, da das verbreiterte Hakenteil auf einem verjüngten Abschnitt des Stanzloches zu liegen kommt, wenn die Zunge parallel zum Schenkel in Richtung Schenkel bzw. Stanzloch gedrückt wird. Wird die Zunge jedoch schräg zum Schenkel in Richtung Schenkel bzw. Stanzloch gedrückt, so kann die Zunge teilweise in das Stanzloch gedrückt werden und dann darin verkanten, so dass ein Zurückbiegen der Zunge nicht oder nur mit erhöhtem Aufwand möglich ist.

Seit vielen Jahren werden daneben auch Pfähle mit sogenannten "innenliegenden" Haken verwendet, bei denen die Haken durch eine entsprechende Ausgestaltung des Pfahles vor einer Beschädigung geschützt sind. Weinbergpfähle mit innenliegenden Haken sind in verschiedenen Variationen seit vielen Jahren bekannt. Auch diese Pfähle weisen einen etwa U-förmigen Querschnitt auf, wobei an den beiden U-Schenkeln zusätzlich nach außen vorstehende Längsrippen ausgebildet sind, die einen ihrerseits etwa U-förmigen, nach innen offenen Querschnitt aufweisen. In den Längsrippen sind Aufnahmetaschen für die Drähte ausgebildet, die aus einer im U-Rücken der Längsrippen ausgebildeten Zunge - dem innenliegenden Haken - und je einem in den U-Schenkeln der Längsrippen ausgebildeten Aufnahmefenster bestehen. Die beiden Aufnahmefenster sind durch einen zwischen dem freien Ende der Zunge und dem U-Rücken gebildeten Schlitz miteinander verbunden, so dass der Draht durch den Schlitz in die Aufnahmetasche hineingelegt bzw. aus der Aufnahmetasche herausgehoben werden kann. Dadurch, dass die Zunge aus dem U-Rücken der Längsrippe gebildet wird und mit diesem in einer Ebene liegt, ist die Gefahr, dass die Zunge durch die Schlagstöcke der Vollerntemaschine umgebogen und damit die Aufnahmetasche zugedrückt wird, wesentlich verringert. Ein derartiger Weinpfahl ist beispielsweise aus der DE 10 2016 100 769 A1 bekannt.

Der Nachteil von Pfählen mit innenliegenden Haken besteht jedoch darin, dass zu ihrer Herstellung aufgrund der Ausbildung der nach außen vorstehenden Längsrippen ein entsprechend breiteres Metallblech benötigt wird, so dass ein erhöhter Materialverbrauch entsteht.

Der vorliegenden Erfindung liegt daher die Aufgabe zugrunde, einen eingangs beschriebenen Pfahl aus Metallblech, insbesondere aus profilgewalztem Stahlblech, dahingehend zu verbessern, dass er möglichst einfach und ressourcenschonend hergestellt werden kann. Dabei soll ein Draht möglichst einfach ein- und umgehängt werden können, aber trotzdem weitestgehend gegen ungewolltes Aushängen gesichert sein. Außerdem soll der Pfahl so ausgebildet sein, dass die Gefahr, dass die außenliegenden Zungen der Haken durch die Schlagstöcke der Vollerntemaschine umgebogen und damit die Haken zugedrückt werden, verringert werden.

Diese Aufgabe ist bei dem eingangs beschriebenen Pfahl mit den Merkmalen des Patentanspruchs 1 dadurch gelöst, dass die Zunge des Hakens kreuzförmig ausgebildet ist und zwei seitliche Flügel und ein oberhalb der Flügel ausgebildetes freies Zungenende aufweist. Die beiden Flügel einer Zunge sind dabei in Richtung des benachbarten U-Schenkels gebogen, so dass der Abstand zwischen dem freien Ende der Flügel und dem gegenüberliegenden U-Schenkel geringer ist als der Abstand zwischen der Zunge und dem U-Schenkel.

Durch die an der Zunge ausgebildeten seitlichen Flügel wird verhindert, dass die Zunge durch Schlagstöcke einer Vollerntemaschine in das Stanzloch im gegenüberliegenden U-Schenkel eingedrückt wird. Dadurch, dass die beiden Flügel einer Zunge in Richtung des benachbarten Schenkels gebogen sind, wird dabei sichergestellt, dass das freie Zungenende auch dann noch einen Abstand zum gegenüberliegenden Schenkel aufweist, wenn die Zunge verbogen ist, so dass eine in Richtung des Schenkels verbogene Zunge einfach wieder in ihre ursprüngliche Position zurückgebogen werden kann. Hierzu kann es bereits ausreichen, wenn ein von dem Haken aufzunehmender Draht von oben am U-Schenkel entlang in Richtung des Hakenfußes heruntergedrückt wird. Da durch die abgebogenen Flügel ein Haken nicht vollständig zugedrückt werden kann, ist auch ein gewolltes Herausheben eines Drahtes aus einem Haken mit geringem Kraftaufwand möglich, da dabei die Zunge durch den nach oben bewegten Draht in ihre Ausgangsposition zurückgebogen wird.

Gemäß einer besonders bevorzugten Ausgestaltung der Erfindung ist der Abstand x zwischen dem freien Ende der Flügel und dem gegenüberliegenden U-Schenkel so gering, dass der Haken nicht plastisch verformt wird, selbst wenn der Flügel so weit verbogen wird, dass die freien Enden der Flügel den gegenüberliegenden Schenkel berühren. Der Abstand der freien Enden der Flügel zum Schenkel und die Länge der Zunge sind dabei so aufeinander abgestimmt, dass die Zunge nicht bleibend verformt wird, sondern im Normalfall aufgrund ihrer Elastizität von alleine in ihre Ausgangslage zurückfedert. Der minimal mögliche Abstand zwischen dem freien Ende der Flügel und dem gegenüberliegenden U-Schenkel wird dabei durch den Durchmesser des von dem Haken aufzunehmenden Drahtes bestimmt. Der Abstand darf dabei nicht so gering gewählt werden, dass ein Draht nicht mehr in den Haken eingeführt werden kann. Aufgrund der Elastizität der Zunge kann der Abstand dabei jedoch ggf. etwas geringer als der Durchmesser des einzuhängenden Drahtes gewählt werden.

Durch die an der Zunge seitlich ausgebildeten Flügel wird nicht nur ein unerwünschtes Zudrücken der Haken verhindert, die Flügel sorgen auch für eine verbesserte Halterung eines Drahtes innerhalb des Hakens. Dadurch wird ein ungewolltes Herausspringen eines Drahtes aus einem Haken zuverlässig verhindert. Dazu ist die dem Haken zugewandte untere Kante der Flügel vorzugsweise unter einem Winkel von etwa 90° zur Längsachse der Zunge ausgerichtet. Zumindest an ihrer unteren Kante sind die Flügel somit vorzugsweise nicht kreisbogenförmig ausgebildet, so dass die untere Kante der Flügel eine Anschlagfläche für einen eingehängten Draht bildet.

Um das Einführen eines Drahtes in den Haken zu erleichtern, ist gemäß einer weiteren vorteilhaften Ausgestaltung vorgesehen, dass das freie Zungenende vom gegenüberliegenden U-Schenkel weg nach außen gebogen ist. Das freie Zungenende und der gegenüberliegende Schenkel des Pfahls bilden dadurch eine Art Einführtrichter für den einzuhängenden Draht. Um eine Beschädigung der Schlagstöcke der Vollerntemaschinen zu verhindern, sind die Ecken der freien Zungenenden vorzugsweise abgerundet, so dass sie keine scharfen Kanten aufweisen. Hierdurch werden insbesondere bei aus Kunststoff bestehenden Schlagstöcken entsprechende Beschädigungen verhindert.

Um die Stabilität der Haken zu erhöhen, ist vorzugsweise am Hakenfuß eine Strebe ausgebildet. Eine solche Strebe kann einfach durch Prägen des Hakenfußes realisiert werden. Alternativ oder zusätzlich kann die Festigkeit des Hakens auch dadurch erhöht werden, dass die Zunge im Querschnitt gewölbt oder V-förmig ausgebildet ist. Die Wölbung der Zunge ist dabei derart ausgebildet, dass die Zunge von ihrer Mittelachse zu ihren Längsrändern in Richtung zum gegenüberliegenden Schenkel gebogen ist. Die Zunge weist somit eine zum Schenkel gerichtete, vorzugsweise C-förmige oder V-förmige Wölbung auf.

Um die Stabilität des Pfahls insgesamt zu erhöhen, ist in den beiden U-Schenkeln vorzugsweise jeweils eine nach außen vorstehende Sicke ausgebildet, die in Längsrichtung des Pfahls verläuft. Befindet sich die Sicke auf der selben Höhe wie die an den Schenkeln ausgebildeten Haken, sorgt die Sicke darüber hinaus dafür, dass ein Draht an die den Schenkel gegenüberliegende Innenfläche der Zunge angedrückt wird, so dass ein ungewolltes Herausspringen eines Drahtes aufgrund der gebogenen Flügel noch besser verhindert wird. Vorzugsweise verlaufen die Sicken dabei im Wesentlichen über die gesamte Länge des Pfahls, so dass durch die Sicke die Festigkeit des gesamten U-Schenkels erhöht wird.

Eine weitere Erhöhung der Festigkeit des Pfahls wird dadurch erreicht, dass die U-Schenkel in ihrem Endbereich nach innen gebogen sind, so dass sich jeweils eine einwärts gerichtete Rinne ergibt. Dadurch, dass die freien Enden der Schenkel abgerundet sind, verringert sich auch die Verletzungsgefahr beim Transport und Handling des Pfahls.

Gemäß einer letzten vorteilhaften Ausgestaltung des erfindungsgemäßen Pfahls, die hier noch kurz erläutert werden soll, sind im U-Rücken und/oder im Übergangsbereich vom U-Rücken zu den U-Schenkeln vorzugsweise mehrere Prägungen ausgebildet. Auch diese Prägungen erhöhen die Festigkeit des Pfahls. Im Übergangsbereich vom U-Rücken zu den U-Schenkeln ausgebildete Prägungen bzw. Streben verhindern darüber hinaus, dass sich der U-förmige Pfahl beim Einschlagen ins Erdreich aufweitet.

Insbesondere dann, wenn der erfindungsgemäße Pfahl im Weinbau eingesetzt wird, es sich somit um einen sogenannten Weinbergpfahl handelt, sind an den U-Schenkeln jeweils mehrere Haken in Längserstreckung des Pfahls übereinander angeordnet. Dadurch können die Drähte während der Vegetationszeit einfach umgehängt werden, wodurch die Reben optimal gestützt werden.

Im Einzelnen gibt es eine Vielzahl von Möglichkeiten, den erfindungsgemä-βen Pfahl auszugestalten und weiterzubilden. Dazu wird verwiesen sowohl auf die dem Patentanspruch 1 nachgeordneten Patentansprüche als auch auf die nachfolgende Beschreibung eines bevorzugten Ausführungsbeispiels in Verbindung mit der Zeichnung. In der Zeichnung zeigen
- Fig. 1: eine perspektivische Darstellung eines oberen Endbereichs eines Pfahls für den Weinbau,
- Fig. 2: den Pfahl gemäß Fig. 1, im Querschnitt,
- Fig. 3: eine vergrößerte perspektivische Darstellung eines Hakens des Pfahls gemäß Fig. 1,
- Fig. 4: einen erfindungsgemäßen Pfahl von der Seite und
- Fig. 5: den erfindungsgemäßen Pfahl in der Rückansicht.

Bei dem in den Figuren dargestellten Pfahl 1 handelt es sich um einen Pfahl 1 für den Weinbau, der dementsprechend häufig auch als Weinbergpfahl bezeichnet wird. Derartige Weinbergpfähle werden zumeist aus einem Metallblech, insbesondere einem Stahlblech durch Profilwalzen und Ausstanzen hergestellt, wobei das Stahlblech häufig verzinkt und/oder beschichtet ist. Durch eine Verzinkung des Weinbergpfahls kann eine maximale Haltbarkeit des Pfahles gewährleistet werden. Die Figuren zeigen lediglich Abschnitte bzw. Teile eines vollständigen Weinbergpfahls, der in der Regel eine Länge von bis zu 3 m und eine Dicke bzw. Materialstärke von ca. 1,25 mm bis 2,00 mm aufweist.

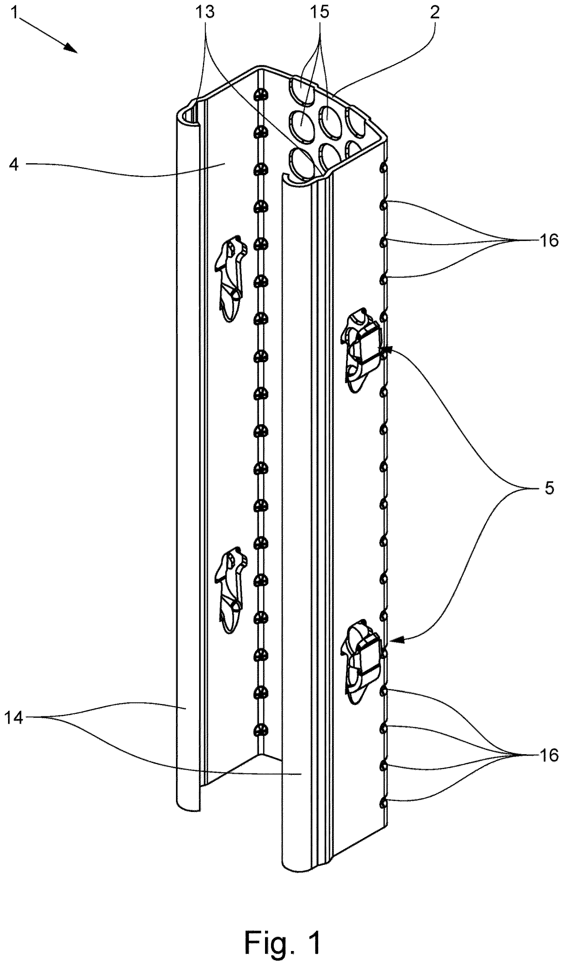

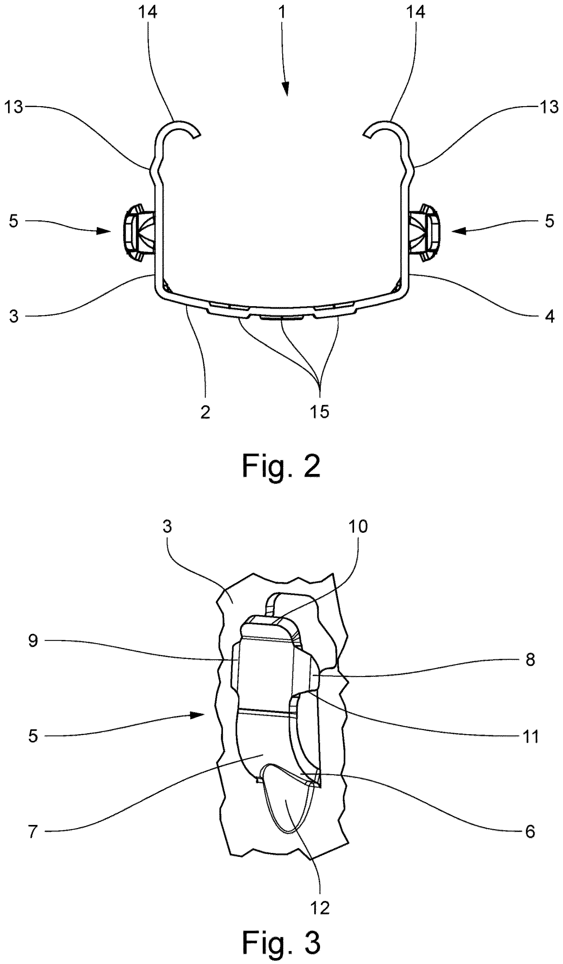

Wie insbesondere aus den Fig. 1 und 2 ersichtlich ist, weist der Pfahl 1 einen näherungsweise U-förmigen Querschnitt mit einem U-Rücken 2 und zwei U-Schenkeln 3, 4 auf. An den beiden U-Schenkeln 3, 4 sind jeweils mehrere außenliegende Haken 5 in Längserstreckung des Pfahls 1 übereinander angeordnet. Die einzelnen Haken 5 sind durch Stanzen und Prägen aus den U-Schenkeln 3, 4 derart gebildet, dass kein Stanzausfall entfernt werden muss. Die Fläche eines Hakens 5 entspricht somit der Fläche einer Stanzöffnung, wobei die Höhe des Hakens 5 etwas geringer als die Höhe der Stanzöffnung ist, da der Haken 5 gegenüber dem U-Schenkel 3, 4 abgebogen ist.

Wie insbesondere aus Fig. 3 ersichtlich ist, weist der Haken 5 einen mit dem U-Schenkel 3, 4 verbundenen Hakenfuß 6 und eine parallel zum U-Schenkel 3, 4 verlaufende Zunge 7 auf. Die Zunge 7 ist dabei kreuzförmig ausgebildet, indem sie zwei seitliche Flügel 8, 9 und ein über die beiden Flügel 8, 9 nach oben hinausragendes freies Zungenende 10 aufweist. Dabei sind die Flügel 8, 9 mit ihren freien Enden in Richtung des benachbarten U-Schenkels 3, 4 gebogen. Der Abstand x zwischen dem freien Ende eines Flügels 8, 9 und dem gegenüberliegenden U-Schenkel 3, 4 ist dabei so gering, dass der Haken 5 nicht plastisch verformt wird, selbst wenn der Flügel 7 durch den Schlagstock einer Vollerntemaschine soweit verbogen wird, dass die freien Enden der Flügel 8, 9 gegen den gegenüberliegenden U-Schenkel 3, 4 stoßen. Hierdurch wird nicht nur ein unerwünschtes Zuschlagen des Hakens 5 verhindert, sondern darüber hinaus erreicht, dass die Zunge 7 aufgrund der Elastizität des Hakens 5 vollständig oder nahezu vollständig in ihre Normalposition zurückfedert.

Um das Einlegen eines Drahtes in den Haken 5 zu erleichtern, ist das freie Zungenende 10 vom gegenüberliegenden U-Schenkel 3, 4 etwas nach außen weggebogen. Das freie Zungenende 10 und der gegenüberliegende U-Schenkel 3, 4 bilden somit eine Art Einführtrichter für einen Draht, der in den Haken 5 eingehängt werden soll. Das Einlegen eines Drahtes in den Haken 5 wird dabei auch dadurch erleichtert, dass die Ecken des freien Zungenendes 10 abgerundet sind. Außerdem wird durch die abgerundeten Ecken verhindert, dass die Schlagstöcke einer Vollerntemaschine beschädigt werden.

Aus Fig. 3 ist darüber hinaus ersichtlich, dass die untere Kante 11 der Flügel 8, 9, die dem Hakenfuß 6 zugewandt ist, nahezu senkrecht zur Längsachse der Zunge 7 verläuft. Hierdurch wird die Halterung eines Drahtes innerhalb des Hakens 5 verbessert, da die untere Kante 11 der Flügel 8, 9 eine Anschlagfläche für einen eingehängten Draht bildet. Die Gefahr des Verbiegens des Hakens 5 ist weiter dadurch verringert, dass am Hakenfuß 6 eine Strebe 12 ausgebildet ist, die durch Prägen des Hakenfußes 6 erzeugt werden kann.

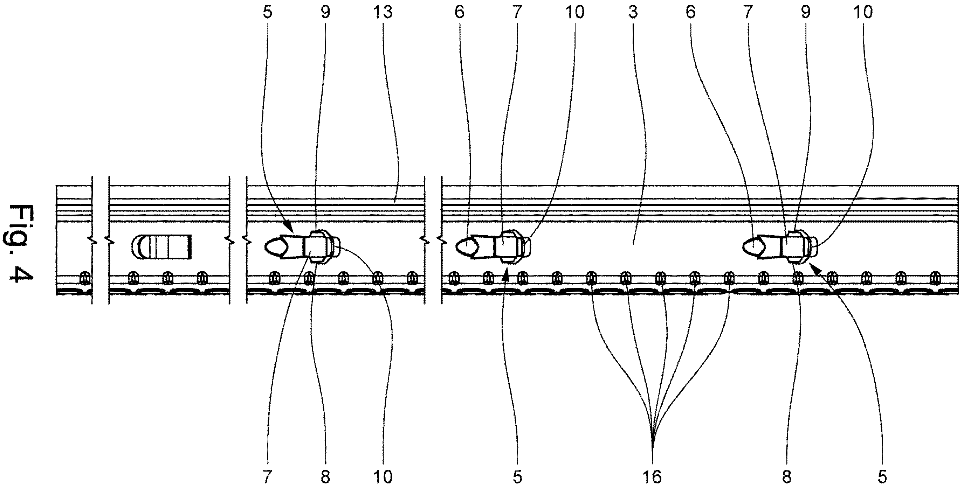

Aus der perspektivischen Darstellung des Pfahles 1 gemäß Fig. 1 und der Seitenansicht des Pfahles 1 gemäß Fig. 4 ist ersichtlich, dass in den beiden U-Schenkeln 3, 4 jeweils eine nach außen vorstehende Sicke 13 ausgebildet ist. Die Sicke 13 verläuft vorzugsweise über die gesamte Länge des Pfahls 1, so dass durch die Sicke 13 die Stabilität des Pfahles 1 und insbesondere die Stabilität der beiden U-Schenkeln 3, 4 erhöht wird. Darüber hinaus wird durch die nach außen gewölbte Sicke 13 auch erreicht, dass ein eingehängter Draht an die dem U-Schenkeln 3, 4 gegenüberliegende Innenfläche der Zunge 7 gedrückt wird. Auch hierdurch wird ein ungewolltes Herausspringen eines Drahtes aus dem Haken 5 verhindert, da der Draht von den gebogenen Flügeln 8, 9 bzw. deren unterer Kante 11 im Haken 5 gehalten wird. Die beiden Sicken 13 befinden sich dabei jeweils zwischen dem Endbereich der U-Schenkel 3, 4 und den übereinander angeordneten Haken 5.

Die Stabilität des Pfahls 1 wird zusätzlich auch dadurch erhöht, dass die U-Schenkel 3, 4 in ihrem Endbereich nach innen gebogen sind, so dass sich jeweils eine einwärts gerichtete Rinne 14 ergibt. Der nach innen gebogene Endbereich der U-Schenkel 3, 4 führt darüber hinaus dazu, dass die U-Schenkel 3, 4 an ihren freien Endbereichen abgerundet sind, so dass die Gefahr von Verletzungen beim Handling des Pfahls 1 verringert wird.

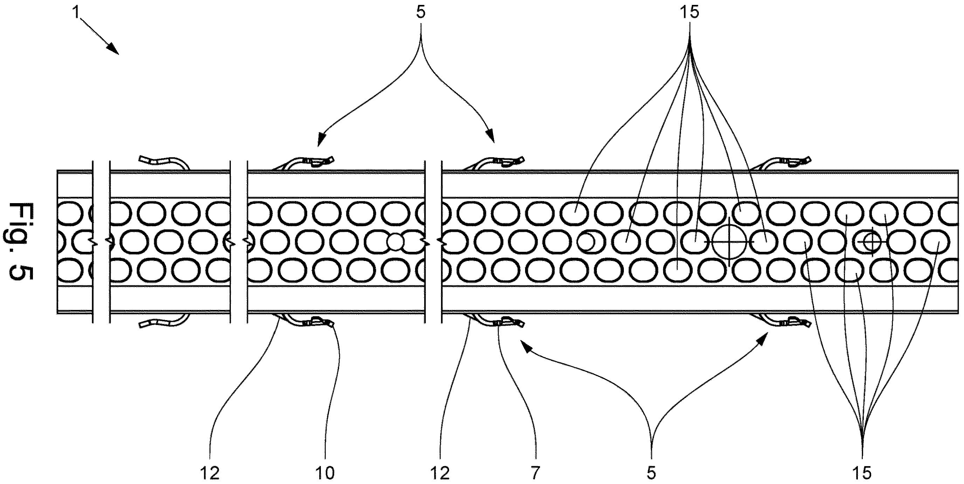

Aus der Rückenansicht des Pfahls 1 gemäß Fig. 5 ist erkennbar, dass im U-Rücken 2 eine Mehrzahl von Prägungen 15 ausgebildet sind, die ebenfalls die Steifigkeit des Pfahls 1 erhöhen. Dem gleichen Zweck dienen auch die Prägungen 16, die im Übergangsbereich vom U-Rücken 2 zu den U-Schenkeln 3, 4 ausgebildet sind. Die Prägungen 16 verhindern darüber hinaus, dass es zu einem Aufweiten des U-förmigen Pfahls 1 beim Einschlagen des Pfahls 1 ins Erdbereich kommt.

Dadurch, dass der Pfahl 1 nur außenliegende Haken 5 aufweist, wird zur Herstellung des Pfahls 1 weniger Material benötigt, als dies bei einem vergleichbaren Pfahl mit innenliegendem Haken der Fall wäre. Durch die Ausbildung der Haken 5 mit kreuzförmigen Zungen 7 und den in Richtung der U-Schenkel 3, 4 gebogenen Flügel 8, 9 wird gleichwohl die Gefahr des Zuschlagens eines Hakens 5 durch die Schlagstöcke einer Erntemaschine wesentlich verringert. Die weiteren zuvor beschriebenen Maßnahmen führen darüber hinaus dazu, dass der Pfahl 1 insgesamt eine sehr hohe Stabilität aufweist, selbst wenn der Pfahl 1 nur eine relativ geringe Materialstärke hat. Der Pfahl 1 ist dadurch insgesamt sehr nachhaltig und ressourcenschonend.

### Bezugszeichen

- 1.: Pfahl
- 2.: U-Rücken
- 3,4.: U-Schenkeln
- 5.: außenliegender Haken
- 6.: Hakenfuß
- 7.: Zunge
- 8, 9.: Flügel
- 10.: Zungenende
- 11.: untere Kante
- 12.: Strebe
- 13.: Sicke
- 14.: Rinne
- 15, 16.: Prägungen

## Patentansprüche

1. Pfahl (1) aus Metallblech für den Wein- oder Obstbau, mit einem im wesentlichen U-förmigen Querschnitt mit einem U-Rücken (2) und zwei U-Schenkeln (3, 4), wobei an den U-Schenkeln (3, 4) jeweils mindestens ein außenliegender Haken (5) zur Aufnahme eines Drahtes ausgebildet ist,
wobei die Haken (5) durch Stanzen und Prägen aus den U-Schenkeln (3, 4) gebildet sind und jeweils einen mit dem U-Schenkel (3, 4) verbundenen Hakenfuß (6) und eine in etwa parallel zum U-Schenkel (3, 4) verlaufende Zunge (7) aufweisen,
**dadurch gekennzeichnet,**
**dass** die Zunge (7) kreuzförmig ausgebildet ist, mit zwei seitlichen Flügeln (8, 9) und einem oberhalb der Flügel (8, 9) ausgebildeten freien Zungenende (10), und dass die beiden Flügel (8, 9) einer Zunge (7) in Richtung des benachbarten U-Schenkels (3, 4) gebogen sind.

2. Pfahl (1) nach Anspruch 1, **dadurch gekennzeichnet, dass** der Abstand (x) zwischen dem freien Ende der Flügel (8, 9) und dem gegenüberliegenden U-Schenkel (3, 4) so gering ist, dass der Haken (5) nicht plastisch verformt wird, wenn der Flügel (7) so ausgelenkt wird, dass die freien Enden der Flügel (8, 9) den gegenüberliegenden U-Schenkel (3, 4) kontaktieren.

3. Pfahl (1) nach Anspruch 1 oder 2, **dadurch gekennzeichnet, dass** die dem Hakenfuß (6) zugewandte untere Kante (11) der Flügel (8, 9) in etwa unter einem Winkel von 90° zur Längsachse der Zunge (7) verläuft.

4. Pfahl (1) nach einem der Ansprüche 1 bis 3, **dadurch gekennzeichnet, dass** das freie Zungenende (10) vom gegenüberliegenden U-Schenkel (3, 4) weg nach außen gebogen ist.

5. Pfahl (1) nach einem der Ansprüche 1 bis 4, **dadurch gekennzeichnet, dass** die Ecken des freien Zungenendes (10) abgerundet sind.

6. Pfahl (1) nach einem der Ansprüche 1 bis 5, **dadurch gekennzeichnet, dass** am Hakenfuß (6) eine Strebe (12) ausgebildet ist.

7. Pfahl (1) nach Anspruch einem der Ansprüche 1 bis 6, **dadurch gekennzeichnet, dass** die Zunge (7) im Querschnitt gewölbt oder V-förmig ausgebildet ist, derart, dass die Zunge (7) von der Mittelachse zu ihren Längsrändern in Richtung zum gegenüberliegenden U-Schenkel (3, 4) gebogen ist.

8. Pfahl (1) nach Anspruch einem der Ansprüche 1 bis 7, **dadurch gekennzeichnet, dass** in den beiden U-Schenkeln (3, 4) jeweils eine nach außen vorstehende Sicke (13) ausgebildet ist, die in Längsrichtung des Pfahls (1) verläuft, wobei die Sicke (13) vorzugsweise zwischen dem Endbereich der U-Schenkel (3, 4) und den Haken (5) angeordnet ist.

9. Pfahl (1) nach einem der Ansprüche 1 bis 8, **dadurch gekennzeichnet, dass** die U-Schenkel (3, 4) in ihrem Endbereich nach innen gebogen sind, so dass sich jeweils eine einwärts gerichtete Rinne (14) ergibt.

10. Pfahl (1) nach einem der Ansprüche 1 bis 9, **dadurch gekennzeichnet, dass** im U-Rücken (2) und/oder im Übergangsbereich vom U-Rücken (2) zu den U-Schenkeln (3, 4) mehrere Prägungen (15, 16) ausgebildet sind.

## Claims

1. Post (1) made of sheet metal for viticulture or fruit growing, having a substantially U-shaped cross-section with a U-back (2) and two U-legs (3, 4), wherein at least one external hook (5) for receiving a wire is formed on each of the U-legs (3, 4),
wherein the hooks (5) are formed from the U-legs (3, 4) by stamping and embossing and each have a hook base (6) connected to the U-leg (3, 4) and a tongue (7) extending approximately parallel to the U-leg (3, 4),
**characterized in**
**that** the tongue (7) is designed to be cross-shaped, with two lateral wings (8, 9) and a free tongue end (10) formed above the wings (8, 9), and that the two wings (8, 9) of a tongue (7) are bent in the direction of the adjacent U-leg (3, 4).

2. Post (1) according to claim 1, **characterized in that** the distance (x) between the free end of the wings (8, 9) and the opposite U-leg (3, 4) is so small that the hook (5) is not plastically deformed when the tongue (7) is deflected so that the free ends of the wings (8, 9) contact the opposite U-leg (3, 4).

3. Post (1) according to claim 1 or 2, **characterized in that** the lower edge (11) of the wings (8, 9) facing the hook base (6) runs approximately at an angle of 90° to the longitudinal axis of the tongue (7).

4. Post (1) according to any one of claims 1 to 3, **characterized in that** the free tongue end (10) is bent outwards away from the opposite U-leg (3, 4).

5. Post (1) according to any one of claims 1 to 4, **characterized in that** the corners of the free tongue end (10) are rounded.

6. Post (1) according to any one of claims 1 to 5, **characterized in that** a strut (12) is designed on the hook base (6).

7. Post (1) according to claim 1 to 6, **characterized in that** the tongue (7) is designed to be curved or V-shaped in cross-section in such a way that the tongue (7) is bent from the central axis to its longitudinal edges in the direction of the opposite U-leg (3, 4).

8. Post (1) according to any one of claims 1 to 7, **characterized in that** an outwardly projecting creasing (13) is designed in each of the two U-legs (3, 4) and extends in the longitudinal direction of the post (1), wherein the creasing (13) is preferably arranged between the end region of the U-legs (3, 4) and the hooks (5).

9. Post (1) according to any one of claims 1 to 8, **characterized in that** the U-legs (3, 4) are bent inwards in their end region, so that an inwardly directed crimp (14) is formed in each case.

10. Post (1) according to any one of claims 1 to 9, **characterized in that** a plurality of stampings (15, 16) are designed in the U-back (2) and/or in the transition region from the U-back (2) to the U-legs (3, 4).

## Revendications

1. Piquet (1) en tôle métallique pour la viticulture ou la culture fruitière, ayant une section transversale essentiellement en forme de U avec un dos de U (2) et deux branches de U (3, 4), au moins un crochet (5) extérieur étant réalisé sur chacune des branches de U (3, 4) pour recevoir un fil métallique,
les crochets (5) étant formés par découpage et estampage à partir des branches de U (3, 4) et présentant respectivement une base de crochet (6) reliée à la branche de U (3, 4) et une languette (7) s'étendant à peu près parallèlement à la branche de U (3, 4),
**caractérisé en ce que**
la languette (7) est réalisée en forme de croix, avec deux ailes latérales (8, 9) et une extrémité de languette libre (10) réalisée au-dessus des ailes (8, 9), et **en ce que** les deux ailes (8, 9) d'une languette (7) sont courbées en direction de la branche de U (3, 4) voisine.

2. Piquet (1) selon la revendication 1, **caractérisé en ce que** la distance (x) entre l'extrémité libre des ailes (8, 9) et la branche de U opposée (3, 4) est suffisamment faible pour que le crochet (5) ne soit pas déformé plastiquement lorsque la languette (7) est déviée de telle sorte que les extrémités libres des ailes (8, 9) soient en contact avec la branche de U opposée (3, 4).

3. Piquet (1) selon la revendication 1 ou 2, **caractérisé en ce que** le bord inférieur (11) des ailes (8, 9) tourné vers la base de crochet (6) s'étend selon un angle d'environ 90° par rapport à l'axe longitudinal de la languette (7).

4. Piquet (1) selon l'une quelconque des revendications 1 à 3, **caractérisé en ce que** l'extrémité de languette libre (10) est courbée vers l'extérieur en s'éloignant de la branche de U opposée (3, 4).

5. Piquet (1) selon l'une quelconque des revendications 1 à 4, **caractérisé en ce que** les coins de l'extrémité de languette libre (10) sont arrondis.

6. Piquet (1) selon l'une quelconque des revendications 1 à 5, **caractérisé en ce qu'**une entretoise (12) est réalisée au niveau de la base de crochet (6).

7. Piquet (1) selon l'une quelconque des revendications 1 à 6, **caractérisé en ce que** la languette (7) est réalisée sous forme bombée ou en forme de V dans la section transversale, de telle sorte que la languette (7) est courbée de l'axe central vers ses bords longitudinaux en direction de la branche de U opposée (3, 4).

8. Piquet (1) selon l'une quelconque des revendications 1 à 7, **caractérisé en ce qu'**une moulure (13) faisant saillie vers l'extérieur est formée respectivement dans les deux branches de U (3, 4), laquelle s'étend dans la direction longitudinale du piquet (1), la moulure (13) étant de préférence agencée entre la zone d'extrémité des branches de U (3, 4) et les crochets (5).

9. Piquet (1) selon l'une quelconque des revendications 1 à 8, **caractérisé en ce que** les branches de U (3, 4) sont courbées vers l'intérieur dans leur zone d'extrémité, de telle sorte qu'il en résulte respectivement une rainure (14) dirigée vers l'intérieur.

10. Piquet (1) selon l'une quelconque des revendications 1 à 9, **caractérisé en ce que** plusieurs estampages (15, 16) sont réalisés dans le dos de U (2) et/ou dans la zone de transition entre le dos de U (2) et les branches de U (3, 4).
